# FASCICULE DE BREVET EUROPEEN

(11) **EP 1 297 204 B1**
(45) Date de publication et mention de la délivrance du brevet: **09.03.2005**
(21) Numéro de dépôt: 01949556.3
(22) Date de dépôt: 28.06.2001
(51) Int. Cl.: D01G 1/04, C03B 37/16

(54) **ENSEMBLE ET PROCEDE DE COUPE DE MECHES FORMEES DE FILAMENTS EN MATIERE THERMOPLASTIQUE**
VORRICHTUNG UND VERFAHREN ZUM SCHNEIDEN VON FILAMENTLUNTEN AUS THERMOPLASTISCHEN MATERIAL
ASSEMBLY AND METHOD FOR CUTTING STRANDS FORMED BY THERMOPLASTIC FILAMENTS

(30) Priorité: 05.07.2000 FR 0008727
(43) Date de publication de la demande: 02.04.2003
(73) Titulaire: Saint-Gobain Vetrotex France S.A., 73000 Chambéry (FR)
(72) Inventeur: FONT, Dominique, F-73190 Saint-Baldolph (FR); PREVOSTO, Henri, F-73100 Aix les Bains (FR); BERTHELON, Laurent, 73290 La Ravoire (FR)
(74) Mandataire: Colombier, Christian
(86) Numéro de dépôt international: PCT/FR2001/002053
(87) Numéro de publication internationale: WO 2002/002854

(56) Documents cités:
- EP-A- 0 849 381
- EP-A- 0 978 580
- CH-A- 284 044
- FR-A- 2 126 663
- GB-A- 2 036 716
- PATENT ABSTRACTS OF JAPAN vol. 008, no. 024 (C-208), 2 février 1984 (1984-02-02) & JP 58 190834 A (NITTO BOSEKI KK), 7 novembre 1983 (1983-11-07)

## Description

La présente invention concerne la fabrication de mèches formées de filaments coupés en matière thermoplastique, notamment de filaments de verre et plus particulièrement un procédé et un ensemble de coupe destiné à une telle fabrication.

De façon connue, la coupole mèches (parfois appelées fils) est obtenue en faisant passer la matière filamenteuse entre une roue dite enclume et une roue dite de coupe équipée de lames dépassant régulièrement à sa périphérie, les deux roues tournant en sens inverse l'une de l'autre. La roue enclume, généralement en élastomère du type polyuréthane, est disposée de manière à venir en contact sous pression avec la tranche des lames dépassant de la roue de coupe, définissant ainsi une zone de coupe.

Pour maintenir de telles installations à un niveau de rentabilité optimal, il est bien entendu nécessaire que la coupe soit réalisée en continu, avec le moins d'arrêts possible. Les arrêts sont essentiellement provoqués par la casse du fil d'alimentation. Après chaque casse il faut « relancer » le dispositif de coupe c'est-à-dire remettre du fil dans la zone de coupe, avec plus ou moins de succès.

Plusieurs solutions sont connues :

Le document FR 2 162 068 décrit une machine de coupe dont le cylindre d'appui se prolonge par une partie tronconique. La machine est enfermée dans un boîtier de protection muni d'une ouverture au travers de laquelle dépasse la partie tronconique du cylindre d'appui, dont la face avant est elle-même masquée par une plaque de protection fixée sur ledit boîtier. Entre la plaque et le boîtier est ainsi ménagée une ouverture latérale au travers de laquelle la mèche constituée de filaments verre est amenée manuellement en contact avec la partie tronconique du cylindre d'appui. La mèche s'enroule et monte sur la surface conique avant d'être reprise entre le coupeur et l'enclume.

La mise en oeuvre d'un tel dispositif impose, à chaque relance, de ramener la vitesse de défilement de la mèche à une valeur d'environ 1 à 2 m/sec : ceci est acceptable lorsque le dispositif est alimenté par une mèche provenant d'une seule filière, mais ne l'est pas dans le cas de la coupe simultanée de plusieurs mèches issues de plusieurs filières. En effet toute rupture accidentelle d'une des mèches entraîne l'arrêt de l'opération de fibrage sur l'ensemble des filières, ce qui perturbe leur marche, accélère l'usure du matériel et réduit sensiblement la productivité de l'installation.

Une variante du dispositif précédent est décrite dans la publication française FR 2 204 715. D'après celle-ci, la machine de coupe comprend un cylindre d'appui prolongé par un tronc de cône se terminant par un sommet de faible diamètre. Un rouleau de démarrage, constitué par une série de disques, vient s'appuyer sur une génératrice du tronc de cône. L'ensemble coupeur/enclume tourne en permanence à sa vitesse normale.

Lors d'une opération de relance, la mèche, passant d'abord dans une roue de guidage alignée avec la zone de coupe, est amenée au voisinage du sommet du tronc de cône sur lequel elle s'enroule donc à faible vitesse. Du fait que la mèche tend à suivre une trajectoire rectiligne, elle est rapidement coincée entre le rouleau de démarrage et la surface du tronc de cône, monte progressivement sur celle-ci en subissant une vitesse d'étirage croissante pour être finalement reprise entre l'enclume et le coupeur.

Cette disposition permet donc d'introduire une mèche sans modifier la vitesse de rotation de la machine de coupe. Cependant ce dispositif n'est pas exempt d'inconvénients.

En effet, pour éviter la rupture prématurée de la mèche, il est nécessaire que sa vitesse d'étirage augmente progressivement ce qui implique l'adaptation sur l'enclume d'un tronc de cône très long qui se trouve naturellement en porte à faux. Cette situation est aggravée par la pression exercée sur le tronc de cône par la série de disques formant le rouleau de démarrage. Un tel dispositif s'use rapidement notamment lorsqu'on veut maintenir des vitesses d'étirage comprises entre 30 et 50 m/sec.

Un autre type de dispositif, décrit dans le document FR 2 397 370, prévoit également l'introduction latérale de la mèche dans l'appareil de coupe.

Ce dispositif comprend un cylindre d'appui auxiliaire disposé adjacent à l'une des extrémités du cylindre d'appui principal et aligné axialement avec ce dernier, et un cylindre auxiliaire porte-lames agencé de manière à coopérer avec le cylindre d'appui auxiliaire.

Lors de la rupture accidentelle d'une mèche, celle-ci peut être réintroduite dans la machine de coupe, sans arrêter cette dernière, de la manière suivante :

Après un étirage manuel, la mèche est introduite entre les cylindres auxiliaires à faible vitesse, et maintenu dans cette position par une poulie à gorge.

La vitesse des deux cylindres auxiliaires, qui font office de machine de coupe, est augmentée progressivement jusqu'à ce que la mèche atteigne sa vitesse d'étirage normale. Par déplacement de la poulie à gorge, la mèche est alors amenée dans la zone de coupe principale.

Ce dispositif constitue une solution intéressante aux difficultés liées à l'introduction d'une mèche fil dans une machine de coupe tournant à grande vitesse. Cependant chaque fois qu'il est nécessaire de changer la machine de coupe principale, on est obligé de démonter et de remonter les cylindres auxiliaires, ce qui n'est pas sans présenter quelque inconvénient dans une fabrication en continu qui exige un minimum de temps morts.

Une solution à ce problème est décrite dans le document FR 2 490 251, qui consiste essentiellement à étirer la mèche dans une zone comprise entre les plans passant par les flancs du cylindre porte-lames coopérant avec un cylindre enclume, les axes de rotation desdits cylindres passant dans un plan sensiblement horizontal, puis à dévier la mèche ainsi étirée vers la zone de coupe définie par la zone de contact entre le cylindre enclume et le cylindre porte-lames, pour le plaquer sur au moins une portion de la surface du cylindre disposé en amont, ladite portion de surface étant sensiblement adjacente à la zone de coupe.

Cependant cette solution nécessite au moins une intervention humaine, pour l'étirage préalable de la mèche dans un plan horizontal jusque dans la zone du lanceur. C'est à ce stade que l'on compte un grand nombre de casses et donc de perte de temps. Ceci est d'autant plus vrai que plusieurs mèches issues de plusieurs filières, sont généralement amenées ensemble par l'opérateur jusqu'au lanceur.

On a ainsi pu mesurer un taux de casse de l'ordre de 20 casses par filière et par jour.

Une autre solution a consisté à imaginer un système de coupe tel que décrit dans le brevet US 5 935 289 où la mèche est pincée sous chaque filière et amenée automatiquement vers un système de relance.

Cependant, ce système est sophistiqué. Il comprend notamment un ensemble de relance assez complexe, un guidage, une protection et une commande pour la pince tout aussi complexes.

La présente invention propose un ensemble qui ne comprend ni roue ni relance, ni roulette de guidage, qui permet par un simple déplacement rectiligne de la mèche de réaliser la relance de façon automatique et qui s'avère par conséquent de mise en oeuvre beaucoup plus simple que les systèmes précédents, permettant d'obtenir un taux de réussite des relances proche de 100 %, en tout cas supérieur à 98 %.

D'autre part, vis-à-vis d'un ensemble de coupe tel que décrit par exemple dans le brevet FR 2 490 251 la présente invention est complètement automatisée puisqu'elle ne comporte pas d'intervention humaine sur la mèche.

En outre la présente invention ne comporte ni bras d'engagement de la mèche dans la zone de coupe, ni roue de relance. Ces éléments sont essentiels au fonctionnement de cet art antérieur mais provoquent un taux d 'échec des relances non négligeable du fait des efforts appliqués à la mèche lors de leur mise en fonction.

Ceci est un inconvénient majeur de l'art antérieur auquel la présente invention permet de remédier.

La présente invention a en effet pour objectif de fournir un ensemble de coupe dont la relance (c'est-à-dire la prise de la mèche et le début de la coupe) soit réalisée sans intervention humaine.

Par ailleurs la présente invention vise une solution simple, comportant un nombre réduit d'éléments, afin d'avoir une fiabilité et donc un rendement accrus.

Ainsi la présente invention a pour objet un ensemble de coupe de mèches formées de filaments en matière thermoplastique, et comprenant une roue porte-lames et une roue-enclume tournant en sens inverse autour de deux axes parallèles, au moins un moyen d'actionnement desdites roues et un moyen de mise en contact de la mèche avec la roue-enclume.

Conformément à l'invention, l'ensemble de coupe comprend en outre
un moyen oscillant de support desdites roues dont l'axe est parallèle à l'axe desdites roues et un moyen d'actionnement associé ;
un moyen de mise en contact desdites roues ;
un moyen destiné notamment à pincer la mèche et un moyen d'actionnement associé destiné à faire passer la mèche entre la roue porte-lames et la roue-enclume lorsque lesdites roues ne sont pas en contact.

Selon l'un des ses aspects, l'ensemble de coupe comprend en outre un moyen destiné à faire varier la position de la mèche sur la roue-enclume afin d'assurer un va et vient du contact sur la largeur de ladite roue.

Ceci permet avantageusement de répartir l'usure de la roue-enclume sur toute sa largeur.

Plus précisément, le moyen de variation comprend au moins un galet actionné par un jeu de biellettes et est associé à une came.

De façon particulière, l'ensemble de coupe selon l'invention peut comprendre en outre un moyen de limitation de la rotation du support oscillant, entre deux positions extrêmes.

Sans sortir du cadre de l'invention, l'ensemble de coupe comprend en outre un moyen d'usinage de la surface périphérique de la roue-enclume.

Par ailleurs, l'ensemble de coupe comprend une roulette de séparation disposée en amont du coupeur et du moyen de mise en contact de la mèche avec la roue-enclume.

L'invention vise en outre un procédé de coupe de fils en matière thermoplastique consistant à disposer au moins une mèche autour d'une roue-enclume selon un certain arc d'enroulement puis à couper la mèche par contact de ladite roue-enclume avec une roue porte-lames tournant en sens inverse de la roue-enclume, lesdites roues ayant deux axes parallèles.

Conformément à l'invention, le procédé de coupe consiste en outre à réaliser une relance automatique de la coupe grâce à une rotation particulière et simultanée de l'axe desdites roues, associée à la rotation desdites roues autour de leurs axes respectifs (x₁, x₂).

De façon plus précise, la relance consiste à pincer la mèche en amont des roues, à la faire passer entre lesdites roues à l'arrêt et écartées l'une de l'autre selon un trajet rectiligne, à rapprocher les roues l'une de l'autre, à déclencher la rotation des roues, à les orienter de façon à avoir un arc d'enroulement optimal de la mèche sur la roue-enclume avant la coupe ainsi qu'une direction donnée de projection des fils coupés.

Selon l'un de ses aspects, le procédé de coupe consiste en outre à faire varier la position de la mèche sur la largeur de ladite roue-enclume.

Ainsi, le procédé de coupe peut comprendre un mouvement de va et vient de la mèche sur la largeur de la roue-enclume.

En outre, le procédé de coupe peut consister un usinage de la roue-enclume, en dehors des périodes de coupe.

Par ailleurs, le procédé consiste à couper la mèche après qu'elle a été pincée.

Selon l'invention, le procédé peut en outre consister à ramener hors de la zone de chute des fils coupés, la partie de la mèche non coupée pendant le mouvement de retour de la pince vers sa position d'origine.

D'autres caractéristiques, avantages, détails de l'invention apparaîtront mieux à la lecture de la description qui va suivre faite à titre illustratif et nullement limitatif en référence aux dessins annexés sur lesquels :
- la figure 1 est une vue schématique d'un ensemble de coupe selon l'invention en position d'arrêt ;
- la figure 2 est un schéma d'ensemble de l'invention ;
- la figure 3 est une vue schématique montrant des éléments essentiels de l'invention juste avant la prise de la mèche ;
- la figure 4 est une vue schématique de l'invention lors de la prise de la mèche ;
- les figures 5 et 6 sont des vues schématiques du coupeur selon l'invention, selon deux positions de coupe ; et
- la figure 7 est une vue schématique du coupeur lors de l'usinage de la roue-enclume.

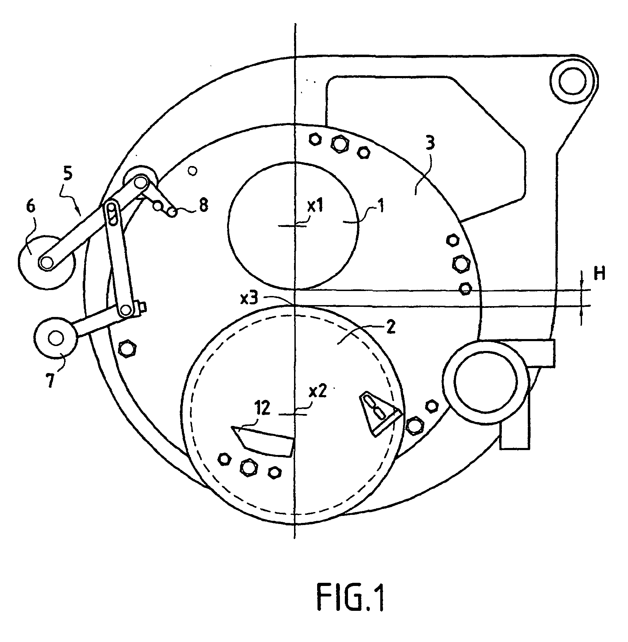

Sur la figure 1 sont représentés de façon schématique les principaux éléments de l'invention.

De façon connue, le coupeur comprend une roue porte-lames 1 munie de lames de coupe dépassant selon ses rayons. Les lames de coupe ne sont pas représentées sur les figures. Le coupeur comprend également une roue dite « enclume » 2 dont l'axe (x₂)est parallèle à celui (x₁) de la roue porte-lames 1 ; lorsque ces deux roues sont rapprochées l'une de l'autre, se touchent par leurs génératrices et tournent en sens inverse l'une de l'autre, une zone de coupe est alors créée.

Bien entendu les vitesses tangentielles respectives des roues 1, 2 doivent être égales et le couple de serrage entre les roues 1 et 2 peut être réglé selon différents paramètres de coupe tels que le diamètre des filaments constituant la mèche, la nature de la mèche, la vitesse de coupe...

Par ailleurs, un roue dite d'usinage 4 peut être prévue à proximité de la roue-enclume 2 afin de rectifier la surface extérieure de cette roue, lorsque cela est nécessaire et/ou possible.

Conformément à l'invention, la roue porte-lames 1 et la roue-enclume 2 sont montées sur un moyen rotatif tel qu'un barillet 3 qui peut osciller autour d'un axe x₃ parallèle aux axes x₁ et x₂ de chacune des roues 1 et 2.

Sur la figure 1, qui concerne une position de non fonctionnement, les roues 1 et 2 sont éloignées d'une distance H qui peut d'ailleurs varier au cours du temps, selon l'usure de la roue-enclume 2.

L'ensemble de coupe selon l'invention comprend en outre un ensemble de biellettes 5 destinées à déplacer et à positionner plusieurs éléments :
- une roulette d'entrée 6 destinée à guider la mèche en amont de la roue-enclume 2 comme il sera explicité plus en détail ci-après ;
- une roulette de séparation 7 destinée à maintenir éventuellement séparés les différents filaments formant la mèche. Cet élément n'est toutefois pas nécessaire au fonctionnement de l'invention.
- un galet de commande 8 dont la fonction sera précisée plus loin.

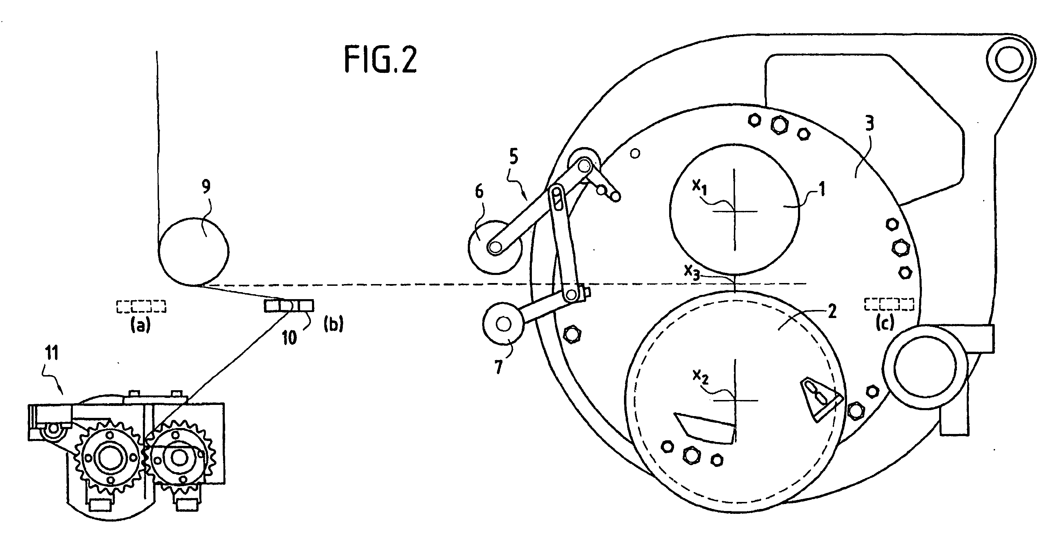

La figure 2 montre non seulement le coupeur en lui-même (comme sur la figure 1) mais également une roulette 9 dite de déviation destinée, en fonctionnement, à dévier la mèche issue d'une filière, de la direction verticale à la direction horizontale. Cette dernière orientation étant celle par laquelle la mèche arrive sur le coupeur.

La figure 2 montre également une pince 10 schématisée dans trois positions différentes (a) (b) et (c) : (a) est une position d'extrémité dans laquelle la pince prend au moins une mèche, (b) est une position intermédiaire dans laquelle la mèche est prise et entraînée par la pince, tandis que (c) est une autre position d'extrémité dans laquelle la mèche est lâchée par la pince. Ce fonctionnement sera explicité plus en détail ci-après. De façon avantageuse, le trajet de la pince est rectiligne.

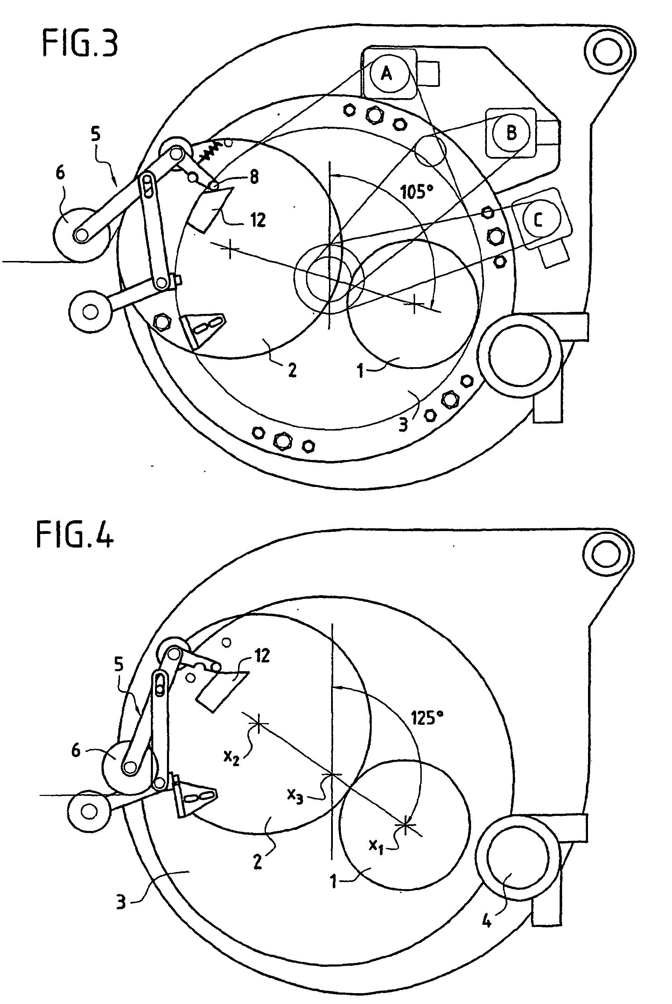

La figure 3 illustre une deuxième position, successive à celle de la figure 1, pour laquelle le barillet 3 a tourné dans le sens contra-rotatif d'un premier angle α₁≅ 105° sous l'action d'un premier moteur A. Une came 12 solidaire du barillet et disposée sur sa périphérie, vient alors en contact du galet 8 ce qui a pour effet de rapprocher la roulette 6 de la roue-enclume 2 qui se trouve maintenant dans la zone des biellettes 5.

A l'issue de cette séquence, c'est-à-dire lorsque le barillet 3 a tourné d'un angle α₂ > α₁, un deuxième moteur C actionne le serrage des roues 1 et 2 l'une contre l'autre tandis qu'un troisième moteur B entraîne la roue de coupe 1.

Entre les positions selon les figures 2 et 3, c'est-à-dire avant le serrage des roues, la pince 9 a fait passer la mèche entre les roues 1 et 2 encore écartées, puis a relâché la mèche une fois les roues 1, 2 serrées l'une contre l'autre et tournant à une vitesse compatible avec le débit de la filière.

La figure 4 illustre cette position avec, à titre illustratif un angle α₂ ≈ 125°. La roulette d'entrée 6 est alors au plus près de la roue-enclume 2.

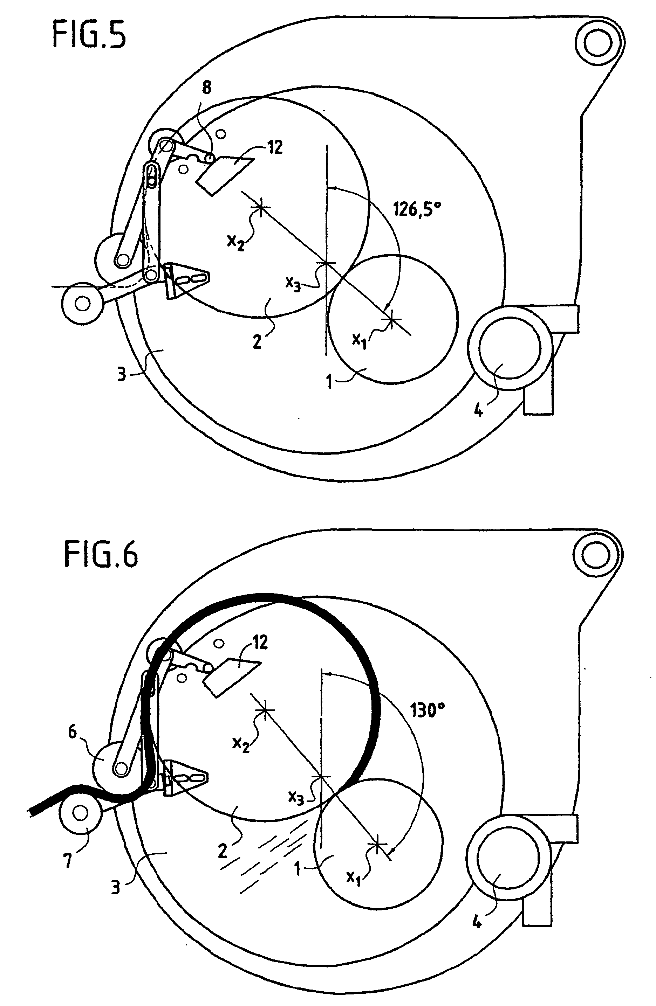

La figure 5 montre une position du barillet 3 légèrement plus décalée que celle de la figure 4, qui correspond au déclenchement d'un mouvement rotatif oscillant du barillet. Ce mouvement est déclenché par la position du galet 8 sur une came 12 et il génère un mouvement de va et vient de la mèche sur la largeur de la roue-enclume 2. Ceci permet avantageusement de répartir uniformément l'usure de ladite roue 2 et donc d'en diminuer les effets.

A ce stade du processus, l'arc d'enroulement de la mèche sur la roue-enclume 2 est de l'ordre de 250°.

Sur la figure 6 apparaît un tracé foncé autour de la roue 2, qui correspond à cet enroulement de la mèche. Par ailleurs ce tracé montre que la mèche passe successivement, en amont de la roue 2, au-dessus de la roulette de séparation 7 et en-dessous de la roulette d'entrée 6.

Vis-à-vis de la figure 5, le barillet 3 a tourné de quelques degrés supplémentaires, jusqu'à une position limite du va et vient, de sorte qu'il oscille dès lors en sens inverse (sens anti-horaire) d'un angle donné jusqu'à la deuxième limite du va et vient. A titre illustratif, le barillet peut osciller d'environ 5° dans son mouvement d'oscillation autour de l'axe x₃.

Par ailleurs, il est possible sans sortir du cadre de l'invention, d'usiner la surface extérieure de la roue-enclume 2. Ceci est réalisé par exemple pendant une casse ou pendant un arrêt programmé.

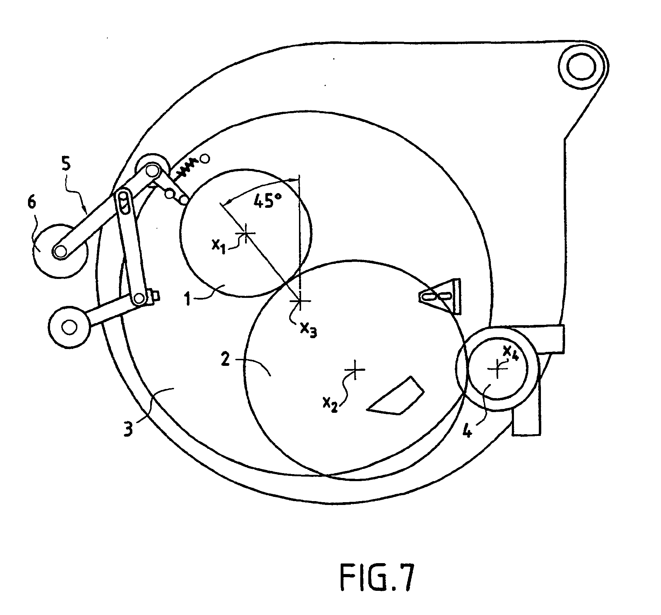

La figure 7 illustre le positionnement du barillet 3 pour cette opération.

Une meule 4 est disposée à peu près diamétralement opposée aux biellettes 5, bien que cette disposition ne soit pas obligatoire. Cette disposition est ici choisie essentiellement pour des raisons d'encombrement.

La roue-enclume 2, à usiner, est amenée par une rotation appropriée du barillet 3, à proximité de la meule 4, de façon à ce que les deux roues (2 et 4) tangentent. De préférence, un même moteur, ici le moteur B de la roue 1, actionne les deux roues et les fait tourner en sens inverse. Pour cette opération, (figure 7) le barillet 3 a tourné d'environ 45° dans le sens anti-horaire vis-à-vis de la position de non-fonctionnement.

Dans ses grandes lignes, le fonctionnement de l'ensemble de coupe selon l'invention est le suivant :

Avant le début d'une relance, l'ensemble se trouve dans la position illustrée par la figure 2, à l'exception de la mèche qui est prise dans le tire-fil 11, c'est-à-dire tendue verticalement. La pince 10 est en position (a).

Un moteur (non représenté) actionne la pince 10 qui, lorsqu'elle touche la mèche, se referme sur elle. La vitesse de la pince doit être adaptée à la vitesse du tire-fil afin de ne pas créer d'à-coup dans la mèche.

Un moyen indépendant permet alors de couper la partie du fil entre la pince 10 et le tire-fil 11.

La pince 10 poursuit son trajet linéaire, indiqué en pointillé sur la figure 2, tirant la mèche avec elle. Elle passe notamment entre les deux roues 1 et 2 qui sont à l'arrêt, écartées l'une de l'autre.

Une fois arrivée en position (c) la pince 10 s'arrête. Avant cet instant, les roues 1, 2 ont été resserrées l'une contre l'autre et mises en rotation : position selon la figure 4. Dès lors il y a prise de la mèche par les roues, avec un serrage plutôt faible au début, puis plus important ce qui signifie le début de la coupe proprement dite.

Par ailleurs, la pince 10, après son arrêt en position (c) revient en position (a) selon un trajet rectiligne parallèle à l'aller mais décalé afin de passer à côté des roues maintenant en fonctionnement. Pendant ce trajet de retour vers la position initiale (a), la pince serre la partie de la mèche non coupée et la ramène en dehors de la zone de chute des fils coupés.

A partir de là, est créé un mouvement oscillant du barillet 3 qui est lié à un mouvement de va et vient de la mèche sur la largeur de la roue-enclume 2.

La coupe proprement dite est ainsi réalisée soit jusqu'à une casse soit jusqu'à un arrêt programmé par exemple pour changer la roue-enclume 2 ou pour l'usiner.

## Revendications

1. Ensemble de coupe de mèches formées de filaments en matière thermoplastique, et comprenant une roue porte-lames (1) et une roue-enclume (2) tournant en sens inverse autour de deux axes parallèles (x₁, x₂), au moins un moyen d'actionnement (B) desdites roues et un moyen (6) de mise en contact d'une mèche avec la roue-enclume (2) **caractérisé en ce qu'**il comprend en outre
- un moyen oscillant (3) de support desdites roues (1, 2) dont l'axe (x3) est parallèle à l'axe desdites roues et un moyen d'actionnement associé (A) ;
- un moyen (C) de mise en contact desdites roues ;
- un moyen (10) destiné notamment à pincer ladite mèche et un moyen d'actionnement associé destiné à faire passer la mèche entre la roue porte-lames (1) et la roue-enclume (2) lorsque lesdites roues ne sont pas en contact.

2. Ensemble de coupe selon la revendication 1 **caractérisé en ce qu'**il comprend en outre un moyen (8, 9) destiné à faire varier la position de la mèche sur la roue-enclume (2) afin d'assurer un va et vient du contact sur la largeur de ladite roue (2).

3. Ensemble de coupe selon la revendication 2 **caractérisé en ce que** le moyen de variation comprend au moins un galet (8) actionné par un jeu de biellettes (5) et est associé à une came (12).

4. Ensemble de coupe selon l'une quelconque des revendications 2 ou 3 **caractérisé en ce qu'**il comprend en outre un moyen de limitation de la rotation du support (3), entre deux positions extrêmes.

5. Ensemble de coupe selon l'une quelconque des revendications précédentes **caractérisé en ce qu'**il comprend en outre un moyen d'usinage (4) de la surface périphérique de la roue-enclume (2).

6. Ensemble de coupe selon l'une quelconque des revendications précédentes **caractérisé en ce qu'**il comprend en outre une roulette de séparation (7) disposée en amont du coupeur et du moyen (6) de mise en contact de la mèche avec la roue-enclume (2).

7. Procédé de coupe de mèches formées de filaments en matière thermoplastique consistant à disposer le fil autour d'une roue-enclume (2) selon un certain arc d'enroulement puis à couper la mèche par contact de ladite roue-enclume (2) avec une roue porte-lames (1) tournant en sens inverse de la roue-enclume (2), lesdites roues ayant deux axes parallèles (x₁, x₂), **caractérisé en ce qu'**il consiste en outre à réaliser une relance automatique de la coupe grâce à une rotation particulière et simultanée de l'axe desdites roues (1, 2) associée à la rotation desdites roues autour de leurs axes respectifs (x₁, x₂).

8. Procédé selon la revendication 7 **caractérisé en ce que** la relance consiste à pincer la mèche en amont des roues, à la faire passer entre lesdites roues à l'arrêt et écartées l'une de l'autre selon un trajet rectiligne, à rapprocher les roues l'une de l'autre, à déclencher la rotation des roues, à les orienter de façon à avoir un arc d'enroulement optimal de la mèche sur la roue-enclume avant la coupe ainsi qu'une direction donnée de projection des fils coupés.

9. Procédé selon la revendication 8 **caractérisé en ce qu'**il consiste en outre à faire varier la position de la mèche sur la largeur de la roue-enclume (2).

10. Procédé selon la revendication 9 **caractérisé en ce qu'**il consiste à réaliser un mouvement de va et vient de la mèche sur la largeur de la roue-enclume (2).

11. Procédé selon l'une quelconque des revendications 7 à 10 **caractérisé en ce qu'**il comprend en outre un usinage de la roue-enclume (2), en dehors des périodes de coupe.

12. Procédé selon l'une quelconque des revendications 8 à 11 **caractérisé en ce qu'**il consiste en outre à couper la mèche après qu'elle a été pincée.

13. Procédé selon la revendication 12 **caractérisé en ce qu'**il consiste en outre à ramener la portion de mèche non coupée, pendant le mouvement de retour de la pince vers sa position d'origine, en dehors de la zone de chute des fils coupés.

## Patentansprüche

1. Vorrichtung zum Zerschneiden von aus aus wärmeformbarem Material bestehenden Filamenten gebildeten Vorgarnen, die ein Schneidrad (1) und ein Ambossrad (2), die sich um zwei parallele Achsen (x₁, x₂) entgegengesetzt drehen, mindestens ein Antriebsmittel (B) für diese Räder und ein Mittel (6), um das Vorgarn mit dem Ambossrad (2) in Berührung zu bringen, umfasst, **dadurch gekennzeichnet, dass** sie außerdem
- ein schwingendes Mittel (3) zum Halten der Räder (1, 2), dessen Achse (x₃) parallel zur Achse dieser Räder steht, und ein damit verbundenes Antriebsmittel (A),
- ein Mittel (C) für das In-Berührung-Bringen dieser Räder und
- ein Mittel (10), das insbesondere vorgesehen ist, das Vorgarn zu ergreifen, und ein damit verbundenes Antriebsmittel, das vorgesehen ist, das Vorgarn zwischen dem Schneidrad (1) und dem Ambossrad (2) hindurchzuschicken, wenn sich diese Räder nicht miteinander in Berührung befinden,
umfasst.

2. Schneidvorrichtung nach Anspruch 1, **dadurch gekennzeichnet, dass** sie darüber hinaus ein Mittel (8, 9) umfasst, das vorgesehen ist, die Lage des Vorgarns auf dem Ambossrad (2) zu verändern, um für das Hin- und Hergehen des Kontakts über die Breite dieses Rades (2) zu sorgen.

3. Schneidvorrichtung nach Anspruch 2, **dadurch gekennzeichnet, dass** das Veränderungsmittel mindestens eine Rolle (8) umfasst, die von einem Satz Schwingarmen (5) angetrieben wird und mit einer Nocke (12) verbunden ist.

4. Schneidvorrichtung nach Anspruch 2 oder 3, **dadurch gekennzeichnet, dass** sie des Weiteren ein Mittel zur Begrenzung der Umdrehung des Halters (3) zwischen zwei Extrempositionen umfasst.

5. Schneidvorrichtung nach einem der vorhergehenden Ansprüche, **dadurch gekennzeichnet, dass** sie weiterhin ein Mittel (4) zur Bearbeitung der Umfangsfläche des Ambossrades (2) umfasst.

6. Schneidvorrichtung nach einem der vorhergehenden Ansprüche, **dadurch gekennzeichnet, dass** sie zusätzlich ein Trennrad (7) umfasst, das vor dem Schneidwerk und dem Mittel (6) für das In-Berührung-Bringen des Vorgarns mit dem Ambossrad (2) angeordnet ist.

7. Verfahren zum Zerschneiden von aus aus wärmeformbarem Material bestehenden Filamenten gebildeten Vorgarnen, das darin besteht, den Faden mit einem bestimmten Wickelbogen auf einem Ambossrad (2) anzuordnen und anschließend das Vorgarn durch Kontakt des Ambossrades (2) mit einem sich entgegengesetzt zu diesem drehenden Schneidrad (1), wobei diese Räder zwei parallele Achsen (x₁, x₂) besitzen, zu zerschneiden, **dadurch gekennzeichnet, dass** es außerdem darin besteht, durch eine bestimmte und zeitgleiche Umdrehung der Welle dieser Räder (1, 2) zusammen mit der Umdrehung dieser Räder um ihre jeweilige Achse (x₁, x₂) einen automatischen Neubeginn des Schneidvorgangs durchzuführen.

8. Verfahren nach Anspruch 7, **dadurch gekennzeichnet, dass** der Neubeginn darin besteht, das Vorgarn vor den Rädern zu ergreifen, es zwischen diesen Rädern, wenn sie stillstehen und voneinander entlang einer geraden Bahn beabstandet sind, hindurchzuschicken, die Räder einander anzunähern, die Umdrehung der Räder auszulösen und diese derart auszurichten, dass ein optimaler Wickelbogen des Vorgarns auf dem Ambossrad vor dem Zerschneiden sowie eine vorgegebene Schleuderrichtung der Kurzfäden entsteht.

9. Verfahren nach Anspruch 8, **dadurch gekennzeichnet, dass** es darüber hinaus darin besteht, die Lage des Vorgarns über die Breite des Ambossrades (2) zu verändern.

10. Verfahren nach Anspruch 9, **dadurch gekennzeichnet, dass** es darin besteht, eine hin- und hergehende Bewegung des Vorgarns über die Breite des Ambossrades (2) auszuführen.

11. Verfahren nach einem der Ansprüche 7 bis 10, **dadurch gekennzeichnet, dass** es des Weiteren eine maschinelle Bearbeitung des Ambossrades (2) außerhalb der Schneidzeit umfasst.

12. Verfahren nach einem der Ansprüche 8 bis 11, **dadurch gekennzeichnet, dass** es weiterhin darin besteht, das Vorgarn zu zerschneiden, nachdem es ergriffen worden ist.

13. Verfahren nach Anspruch 12, **dadurch gekennzeichnet, dass** es zusätzlich darin besteht, den nicht zerschnittenen Teil des Vorgarns während der Rückkehrbewegung des Greifers in dessen Ausgangsposition außerhalb des Bereichs des Herabfallens der Kurzfäden zurückzubringen.

## Claims

1. An assembly for cutting strands formed of thermoplastic filaments and comprising a blade-holder wheel (1) and an anvil-wheel (2) rotating in opposite directions about two parallel axes (x₁, x₂), at least one means (B) of actuating said wheels and a means (6) of bringing a strand into contact with the anvil-wheel (2), **characterized in that** it further comprises
- an oscillating means (3) of supporting said wheels (1, 2) the axis (x3) of which is parallel to the axis of said wheels and an associated actuating means (A);
- a means (C) for placing said wheels in contact;
- a means (10) intended in particular to grip said strand and an associated actuating means intended to pass the strand between the blade-holder wheel (1) and the anvil-wheel (2) when said wheels are not in contact.

2. The cutting assembly as claimed in claim 1, **characterized in that** it further comprises a means (8, 9) intended to vary the position of the strand on the anvil-wheel (2) so as to ensure that the contact moves back and forth across the width of said wheel (2).

3. The cutting assembly as claimed in claim 2, **characterized in that** the variation means comprises at least one roller (8) actuated by a set of link rods (5) and is associated with a cam (12).

4. The cutting assembly as claimed in either one of claims 2 and 3, **characterized in that** it further comprises a means of limiting the rotation of the support (3) between two extreme positions.

5. The cutting assembly as claimed in any one of the preceding claims, **characterized in that** it further comprises a means (4) of machining the peripheral surface of the anvil-wheel (2).

6. The cutting assembly as claimed in any one of the preceding claims, **characterized in that** it further comprises a separating small wheel (7) arranged upstream of the cutter and of the means (6) for placing the strand in contact with the anvil-wheel (2).

7. A method for cutting strands formed of thermoplastic filaments consisting in arranging the thread around an anvil-wheel (2) with a certain wrap arc then in cutting the strand by contact of said anvil-wheel (2) with a blade-holder wheel (1) rotating in the opposite direction to the anvil-wheel (2), said wheels having two parallel axes (x₁, x₂), **characterized in that** it further consists in automatically restarting cutting by virtue of a particular and simultaneous rotation of the axis of said wheels (1, 2) which is associated with the rotation of said wheels about their respective axes (x₁, x₂).

8. The method as claimed in claim 7, **characterized in that** the restart consists in gripping the strand upstream of the wheels, in passing it between said wheels in the stationary and parted from one another state in a straight path, in moving the wheels closer together, in initiating the rotation of the wheels, in orienting them in such a way as to have an optimum wrap arc of the strand over the anvil-wheel prior to cutting and a given direction of projection of the cut threads.

9. The method as claimed in claim 8, **characterized in that** it further consists in varying the position of the strand across the width of the anvil-wheel (2).

10. The method as claimed in claim 9, **characterized in that** it consists in giving the strand back and forth movement across the width of the anvil-wheel (2).

11. The method as claimed in any one of claims 7 to 10, **characterized in that** it further comprises machining of the anvil-wheel (2) outside the cutting periods.

12. The method as claimed in any one of claims 8 to 11, **characterized in that** it further consists in cutting the strand after it has been gripped.

13. The method as claimed in claim 12, **characterized in that** it further consists in returning the uncut strand portion, while the gripper is returning to its original position, out of the region into which the cut threads fall.
